(19) Europäisches Patentamt
European Patent Office
Office européen des brevets

(11) **EP 2 987 578 B1**

(12) **EUROPÄISCHE PATENTSCHRIFT**

(45) Veröffentlichungstag und Bekanntmachung des Hinweises auf die Patenterteilung:
**03.04.2019 Patentblatt 2019/14**

(51) Int Cl.:
***B23H 1/02*** *(2006.01)*     ***B23H 11/00*** *(2006.01)*

(21) Anmeldenummer: **14181529.0**

(22) Anmeldetag: **20.08.2014**

(54) **Verfahren und Impulsformeinrichtung für funkenerosive Bearbeitung**

Method and impulse form device for spark erosion machining

Procédé et dispositif de formation d'impulsion pour usinage par électroérosion

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.02.2016 Patentblatt 2016/08**

(73) Patentinhaber: **Agie Charmilles SA**
**6616 Losone (CH)**

(72) Erfinder: **Bühler, Sara**
**6616 Losone (CH)**

(74) Vertreter: **Fenner, Seraina et al**
**Georg Fischer AG**
**Amsler-Laffon-Strasse 9**
**8201 Schaffhausen (CH)**

(56) Entgegenhaltungen:
**EP-A1- 1 719 570**    **DE-A1- 3 602 848**
**DE-A1- 4 422 834**    **JP-A- S56 119 316**
**US-A- 4 491 713**    **US-A1- 2003 006 721**

EP 2 987 578 B1

## Beschreibung

Die Erfindung betrifft ein Verfahren und eine Impulsformeinrichtung für funkenerosive Bohr- Senk- Fräs- und Drahtschneide- Bearbeitung im Bearbeitungsbereich höchster Oberflächenqualität und höchster Genauigkeit nach den Oberbegriffen der Ansprüche 1 und 12.

Problemstellung:

Die Hersteller von funkenerosiv abtragenden Werkzeugmaschinen sind generell mit dem Problem konfrontiert, dass trotz allen Bemühungen bei der Verkabelung des Arbeitsraumes kurze, rechteckförmige Bearbeitungsimpulse sehr schlecht auf die Funkenstrecke übertragbar sind.

Das trifft besonders für Stromamplituden von größer als etwa 5A und Impulszeiten von kürzer als etwa $0.5\mu$s zu. Verantwortlich für eine Impuls- verbreiternde und Impulsverflachende Deformation ist die parasitäre Streuinduktivität zwischen Impulsquelle und Funkenentladung, welche auch im besten Fall 300nH übersteigen dürfte.

Eine Möglichkeit wäre, die Impuls- Quellenspannung zu erhöhen, was aber unrealistisch ist, weil die Impulsspannung als einer der wichtigsten Prozessparameter unabhängig einstellbar sein muss.

Die Physik des funkenerosiven Abtrages ist im Bereich der Impulszeiten welche kürzer als etwa 100ns sind, besonders interessant, weil unterhalb dieser Grenze der Abtragsprozess von teilweisem Abschmelzen in reines Abdampfen, sogenannte Ablation übergeht. Die Temperaturgrenze am Entladungsort wird dabei derart scharf, dass keinerlei Gefüge- Veränderungen im Werkstückmaterial auftreten.

Das Kondensat dieses Metalldampfes ist, soweit nicht im Dielektrikum als Metalloxyd oder Metallhydroxyd gelöst, nur noch als extrem feinkörnige Partikel im Dielektrikum vorhanden. Das führt zu einem weiteren wichtigen Vorteil, nämlich zu einer Unterdrückung der unkontrollierbaren und schädlichen Lateralentladungen, über größeres Abtragsgranulat, beispielsweise in Präzisionsbohrungen.

Bei der Betrachtung der jüngeren Geschichte der Laserbearbeitung, welche der Funkenerosion eng verwandt ist, stellt man eine analoge Entwicklung fest. Es wurden mit immer kürzeren Strahlimpulsen, bis hin zu Femtosekunden, sowie höheren Impulsleistungen, teils unerwartet gute Bearbeitungsresultate betreffend Abtragsleistung und Oberflächenqualität erzielt. Die Verbesserungen traten dabei quantenartig beim Durchbrechen diskreter Grenzwerte für Impulszeit und Strahlleistung ein.

Für die im physikalischen Prinzip vergleichbar wirkende Funkenerosion war bisher der Weg in Richtung ultrakurzer Impulse aus den oben genannten Gründen verschlossen. Darum braucht es grundsätzlich neue Lösungen um die parasitäre Streuinduktivität des Entladebereiches wirkungsvoll zu reduzieren.

Stand der Technik:

Koaxialkabel oder auch Streifenleiter werden nun seit bald 100 Jahren als Impulsformeinrichtungen verwendet. Die Hauptanwendungsgebiete waren in der Hochenergiephysik für die Nuklearforschung, Ultraschallgeneratoren, Radaranlagen und in der Zellbiologie- Forschung zu finden.

Die JPS56-119316A von Mitsubishi offenbart Zuleitungen mit jeweils einem Kondensator. Eine Zuleitung mit einem Kondensator weist jedoch viel zu lange Anstiegszeiten auf. Rechteckimpulse sind ebenso wenig realisierbar.

In Figur 4 dieser Anmeldung ist eine bekannte Lösung mit Koaxialkabel aus der Patentschrift EP 1 719 570 vom Erfinder D'Amario wiedergegeben, wo schon vorhandene Leistungskabel in einer funkenerosiven Drahtschneidemaschine innovativ, als Impulsformungseinrichtung benutzt werden, um spezifische Impulsleistungen von 100kW/mm$^2$ zu erreichen. Impulsströme von 36A nach 150ns Impulszeit bzw. 43A nach 190ns Impulszeit werden angegeben, und für die Anwendung im mittleren Bearbeitungsbereich vor der Schlichtbearbeitung als hinreichend gut befunden.

D'Amario weist auch unter Bezugnahme auf die Patentschrift DE 26 53 857, Ullmann et al. darauf hin, dass man durch die Verwendung von Schleifkontakten die Stromanstiegszeit zusätzlich verbessern könnte.

Aneinandergereihte Kapazitäts- Induktivitäts-Verzögerungsglieder, als Ersatz homogener Verzögerungsleitungen, die sogenannten diskreten Verzögerungsleitungen, sind ebenfalls seit langem bekannt.

Diskrete Verzögerungsleitungen wurden beispielsweise schon im Jahr 1957 für einen Funkenerosionsgenerator, welcher keinerlei elektronische Schaltmittel aufwies, im Patent US 3,033,971 von Pfau vorgeschlagen. Die in Figur 5 wiedergegebene Lösung zeigt eine Entkopplungsimpedanz R, L zur Ladung der diskreten Verzögerungsleitung, und eine Sättigungsdrossel Ls als Schaltelement. Das Spannungs- Zeitintegral der Sättigungsdrossel Ls kann über eine Vormagnetisierung variiert werden. Ein zur Funkenstrecke paralleler Widerstand sorgt für einen stabilen Eintritt der Sättigung falls sich die Funkenstrecke in einem sehr hochohmigen Zustand befindet.

Als Nachteil des Standes der Technik muss man sicher auf die schlechte Skalierbarkeit aller auf Koaxialkabel oder Streifenleiter basierenden Lösungen hinweisen. Möchte man nämlich höhere Impulsleistungen erzielen, so wird diese Lösung sofort extrem voluminös und kostenintensiv.

Die Schrift EP 1 719 570 von D'Amario bildet da eine Ausnahme, weil er zufälligerweise die für seine Aufgabe geeigneten Kabel im Materialwert von rund € 1'000.-schon auf der Maschine vorfand.

D'Amario verschweigt in seiner Schrift EP 1 719 570 aber auch nicht, dass er theoretisch einen Impuls von 50 A bei 42 ns, (entsprechend 1.2 A/ns) erwartet hätte, jedoch nur einen solchen von 36 A bei 150 ns, (entsprechend 0.24 A/ns) gemessen hat. Offensichtlich war das für die Lösung seiner Aufgabe absolut ausreichend, eine konsequente Weiterentwicklung der Funkenerosions-Technologie verlangt aber nach radikaleren Ansätzen.

Der Hauptgrund warum viele Lösungen mit Koaxialkabel so unerwartet schlechte Resultate für die Impulsform liefern, liegt in der Unmöglichkeit eine nahezu induktivitätsfreie Verbindung zwischen den sperrigen Kabeln und der Last zu realisieren. Je tiefer die Ladespannung gewählt wird, desto grösser wird das Induktivitätsproblem. Es erstaunt deshalb nicht, dass ein Grossteil der einschlägigen Publikationen nur mit theoretischen Simulationen aufwartet.

Der Hauptnachteil des Generators gemäss der Schrift US 3,033,971 von Pfau besteht in der zusätzlichen großen Restinduktivität der Sättigungsdrossel Ls im gesättigten Zustand, welche sich noch zur Streuinduktivität der Verkabelung addiert. Somit ist eine Anwendung dieser Lösung zur Erzeugung extrem kurzer Impulse völlig ungeeignet. Weitere Nachteile betreffen natürlich noch die Sicherheit gegen Kurzschlüsse und Lichtbögen auf der Funkenstrecke, sowie die fehlende unabhängige Steuerbarkeit der Prozessparameter.

Der Erfindung liegt die Aufgabe zugrunde, einen Beitrag zur Überwindung der eingangs erwähnten Grenzen von Impulszeiten und übertragbaren Impulsamplituden zu leisten.

Diese Aufgabe wird durch das Verfahren gemäss Anspruch 1 und der Impulsformeinrichtung gemäss Anspruch 12 gelöst.

Dank dem erfindungsgemässen Verfahren und deren entsprechenden Impulsformeinrichtung ist es möglich, kürzere und leistungsstärkere Impulse zu generieren, was einen markanten Fortschritt der Funkenerosionstechnologie hin zu höherer Abtragsleistung, feineren Konturen, besserer Oberflächenqualität und höherer Präzision ermöglicht.

Im Vergleich zu den beiden bekannten Lösungen der diskreten Verzögerungsleitung und des Schleifkontaktes auf dem Werkstück, wird bei der erfindungsgemässen Lösung die Streuinduktivität der Zuleitung zur Funkenstrecke ganz eliminiert und die verbleibende geringe Streuinduktivität der Funkenstrecke selbst als integraler Bestandteil des letzten Speichergliedes der diskreten Verzögerungsleitung behandelt.

Das erfindungsgemässe Verfahren für die funkenerosive Bearbeitung zur Formung von rechteckförmigen Impulsen durch Entladung von diskreten Verzögerungsleitungen umfassend mehrere Speicherglieder, lässt sich dadurch charakterisieren, dass die Speicherglieder als Teil einer Zuleitung zu einer Funkenstrecke auf einem Abschnitt der Zuleitung bei der Funkenstrecke angeordnet sind und dass die diskrete Verzögerungsleitung über elektrodenseitige Kontaktmittel auf einen Führungskopf verbunden wird und über werkstückseitige Kontaktmittel auf ein Werkstück verbunden wird. Dadurch wird es möglich kürzere und leistungsstärkere Impulse zu generieren.

Die Erfindung umfasst weiter eine Impulsformeinrichtung zur Erzeugung von rechteckförmigen Impulsen für die funkenerosive Bearbeitung durch Funkenentladung mittels diskreter Verzögerungsleitungen. Diese enthält mehrere kettenförmig angeordnete Speicherglieder, wobei die Speicherglieder als Teil einer bandförmigen und biegsamen Zuleitung zu einer Funkenstrecke in gedruckter oder oberflächenbestückbarer Form auf dem Abschnitt bei einer Funkenstrecke am Ende der bandförmigen und biegsamen Zuleitung angeordnet sind, und dass die diskrete Verzögerungsleitung elektrodenseitige Kontaktmittel aufweist, um auf einen Führungskopf elektrischen Kontakt und mechanischen Halt her- bzw. sicherzustellen und werkstückseitig Kontaktmittel aufweist, welche mit einem Werkstück elektrischen Kontakt herstellen.

Vorteilhafte Ausgestaltungen und Ausführungsformen der Erfindung sind in den abhängigen Ansprüchen zu finden.

Die Erfindung wir im Folgenden anhand mehrerer, denkbaren Ausführungsformen erklärt. Selbstverständlich ist die Erfindung jedoch nicht auf diese Ausführungsformen und Anwendungsgebiete beschränkt.

Das beschriebene erfindungsgemässe Verfahren und deren Impulsformeinrichtungen sind besonders zur Erzeugung filigraner und hochpräziser Strukturen durch funkenerosiven Abtrag geeignet. Daneben sind weitere Anwendungsgebiete denkbar. Die Erfindung ist allgemein für die funkenerosive Bohr-, Senk-, Fräs-, und Drahtschneidetechnologie gleichermaßen gut geeignet. Für sehr großflächige Senkelektroden ist das Verfahren allerdings wegen der hohen Streukapazität zwischen Elektrode und Funkenstrecke weniger geeignet, denn eine programmierte Impulsform würde durch eine sehr hoher Streukapazität der Entladestrecke ebenfalls deformiert.

Das Hauptanwendungsfeld ist somit die Herstellung von Produkten wie Spinndüsen, Kraftstoff-Einspritzdüsen, Kühlbohrungen in Strahlturbinen, aber auch Stanz- Zieh- und Presswerkzeugen, sowie die Massenfertigung von Präzisionsmikroteilen.

Nachfolgend werden unter Bezugnahme auf die beiliegenden Zeichnungen bevorzugte Ausführungsformen und Varianten der Erfindung näher erläutert. Es zeigen:

Fig. 1     Ein einzelnes Speicherglied einer diskreten Verzögerungsleitung nach dem erfindungsgemäßen Verfahren.

Fig. 2     Eine diskrete Verzögerungsleitung mit Entkopplungsimpedanz und Diode nach einer ersten Variante des erfindungsgemäßen Verfahrens.

Fig. 3     Eine doppelte diskrete Verzögerungsleitung nach einer weiteren Variante des erfindungsgemäßen Verfahrens.

Fig. 4     Eine bekannte Lösung aus der Patentschrift EP 1 719 570 mit homogenen Verzögerungsleitungen, bestehend aus mehreren Koaxialkabeln.

Fig. 5     Eine bekannte Lösung aus der Patentschrift US 3 033 971 mit diskreter Verzögerungsleitung.

Fig. 6     Einbaubeispiel einer diskreten Verzögerungsleitung für eine elektroerosive Bohrmaschine nach einem weiteren erfindungsgemäßen Verfahren.

Fig. 7     Beispiel der Integration in eine elektroerosive Bohrmaschine, geeignet für automatische Einwechslung mehrerer diskreten Verzögerungsleitungen nach einem weiteren erfindungsgemäßen Verfahren.

Fig. 8a     Beispiel eines Entladeimpulses mit Diode bei einer Quellenspannung von 100V.

Fig. 8b     Beispiel eines Entladeimpulses mit Diode bei einer Quellenspannung von 200V.

Fig. 9a     Beispiel eines Impulszuges ohne Diode bei einer Quellenspannung von 100V.

Fig. 9b     Beispiel eines Impulszuges ohne Diode bei einer Quellenspannung von 200V.

Fig. 10a     Beispiel eines Impulszuges mit zwei Dioden bei einer Quellenspannung von 100V.

Fig. 10b     Beispiel eines Impulszuges mit zwei Dioden bei einer Quellenspannung von 200V.

Sogenannte diskrete Verzögerungsleitungen sind ideal geeignet, um beliebig formbare Leerlaufspannungsimpulse präziser Spannung und Impulszeit zu erzeugen.
Eine typische Anwendung ist die submikrometergenaue Kalibrierung von Mikrobohrungen für Düsen aller Art.

Nach erfolgter Zündung der Funkenstrecke können je nach Charakteristik und Anzahl der Speicherglieder dank der Erfindung fast beliebig kurze und fast beliebig hohe Stromimpulse verzögerungsfrei geliefert werden. Die vorhandenen, limitierenden physikalischen Phänomene wurden schon einleitend diskutiert. Diese können dank der Erfindung weitgehend überwunden werden.

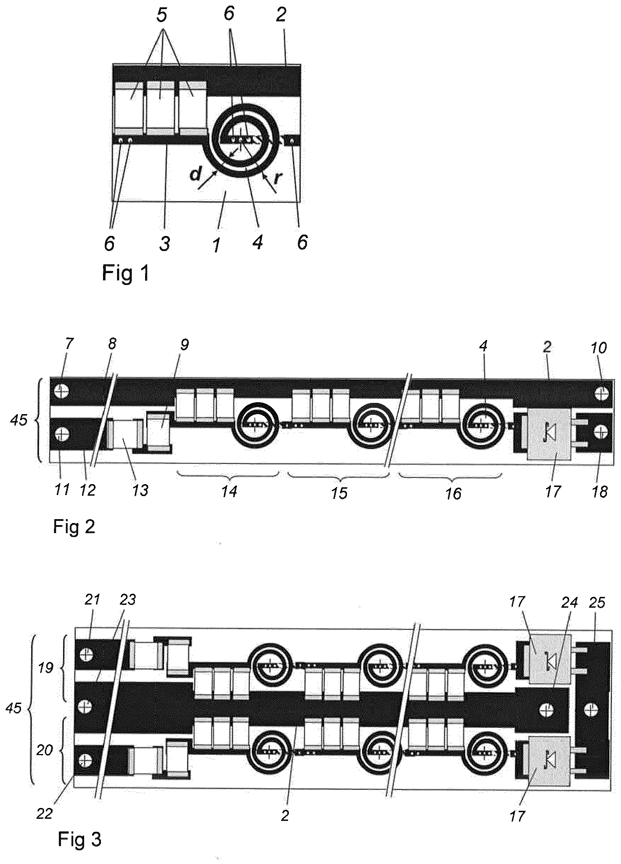

In Fig. 1 ist ein einzelnes Speicherglied 4, 5 einer diskreten Verzögerungsleitung dargestellt, bestehend aus einer gedruckten Induktivität 4 und beispielsweise aus drei Kapazitäten 5. Die Induktivität 4 ist eine flache Luftspule deren Induktivität näherungsweise anhand der folgenden Gleichung bestimmt werden kann:

$$L = 10 \cdot N^2 \cdot r^2 / (2 \cdot r + 2.8 \cdot d)$$

Wobei L die Induktivität der Spule in nH ist, N die Windungszahl der Spule bedeutet, r der äußere Radius der Spule in mm ist, und d die Dicke der Wicklung in mm bestimmt. Beispielsweise hätte eine Spule von N=2, r=6.5mm und d=5.5mm entsprechend eine typische Induktivität von 59.5nH.

Die Speicherglieder 4, 5 werden aus einer beidseits mit Kupfer beschichteten flexiblen Leiterfolie 1 hergestellt bzw. darauf aufgelötet. Die Leiterfolie 1 kann beispielsweise aus Pyralux® AP9222R des Herstellers DuPont™, einer nur gerade 50$\mu$m starken Kunststoff- Folie bestehen. Diese Folie ist hochflexibel, reiß- und biegefest, und kann über 12kV isolieren. Leitende Kontaktierungsbohrungen 6 können die beidseitigen Leiterstrukturen elektrisch verbinden.

Die Kapazität 5 besteht normalerweise aus mehreren oberflächenbestückbaren sogenannten SMD-Keramikkondensatoren, welche zwischen einer Leiterbahn 2 zum Werkstück führend, und einer Leiterbahn 3 zur Elektrode führend aufgelötet sind.

Für kleinere Kapazitätswerte bis etwa 200pF könnte die Kapazität 5 alternativ und preisgünstig aus zwei Kupferflächen (nicht gezeichnet), welche beidseits der Leiterfolie 1 angeordnet sind, aufgebaut werden. Es kann auch eine Kombination bestehend aus gedruckten Kondensatoren und SMD- Kondensatoren sinnvoll sein.

Anhand einer weiteren Gleichung kann man die Kapazität zweier Kupferflächen A in mm², im Abstand von D in mm näherungsweise bestimmen:

$$C = 0.0085 \cdot \varepsilon_R \cdot A / D$$

Wobei C die Kapazität in pF, $\varepsilon_R$ die relative Dielektrizitätskonstante bedeuten. Werden beispielsweise auf Pyralux® AP9222R, welches ein $\varepsilon_R$ von 3.4 aufweist, zweiseitig Flächen A von 10mm * 20mm, im Abstand D von 0.050mm aufgebracht, so entsteht typischerweise ein Kondensator C von 115.6pF mit einer typischen Toleranz von +11%/ - 9%, und einer Spannungsfestigkeit von 12kV und einem Verlustfaktor bei 1MHz von 0.002.

Ähnliche Überlegungen können auch für die Induktivität 4 gemacht werden, welche alternativ rechteckförmig gestaltet sein könnte, oder durch eine lange Leiterbahn, für kleinere Werte bis etwa 50nH aufgebaut sein könnte.

Für höhere Impulsströme und höhere Induktivitätswerte sollte man jedenfalls auf SMD-Bauteile zurückgreifen. Ein zusätzliches Argument für abgeschirmte SMD- Induktivitäten wäre auch die viel geringere elektromagnetische Abstrahlung, denn Luftspulen sind immer auch gute Sendeantennen.

Fig. 2 stellt die kettenförmige Anordnung eines ersten Speichergliedes 14, mit einem zweiten Speichergliedes 15 und einem letzten Speicherglied 16 dar.

Entscheidend für das Erreichen guter Impulseigenschaften, ist die Anordnung dieser Kette von Speichergliedern 14, 15, 16 und der Diode 17 möglichst nahe beim Werkstückanschluss 10 und beim Elektrodenanschluss 18.

Die letzte Induktivität 4 des letzten Speichergliedes 16 in Richtung Funkenstrecke 44 kann gegebenenfalls kleiner gewählt als die übrigen Induktivitäten 4, oder sogar weggelassen werden, falls die Streuinduktivität der Funkenstrecke nicht vernachlässigbar ist.

Idealerweise sollte die Summe von Streuinduktivität und letzter Induktivität 4 gleich dem Wert der übrigen dargestellten Induktivitäten der diskreten Verzögerungsleitung entsprechen. Eine zu tiefe Summe würde eine Stromspitze am Impulsanfang und eine Impuls-Welligkeit erzeugen, ein zu hoher Wert würde den Impuls verlängern und verflachen. In Sonderfällen könnte eine derartige Fehlanpassung sogar als Option in Betracht kommen.

Die Diode 17 verhindert ein Umschwingen des Entladestromes am Ende eines Impulses. Bevorzugt werden dafür Schottky- Dioden, insbesondere Siliziumkarbid- Dioden eingesetzt, weil diese praktisch frei von Vorwärts- und Rückwärtserholungszeiten sind. Alternativ könnten auch mehrere Dioden kleinerer Spannung in Serie geschaltet, oder mehrere Dioden geringerer Stromtragfähigkeit parallel geschaltet werden.

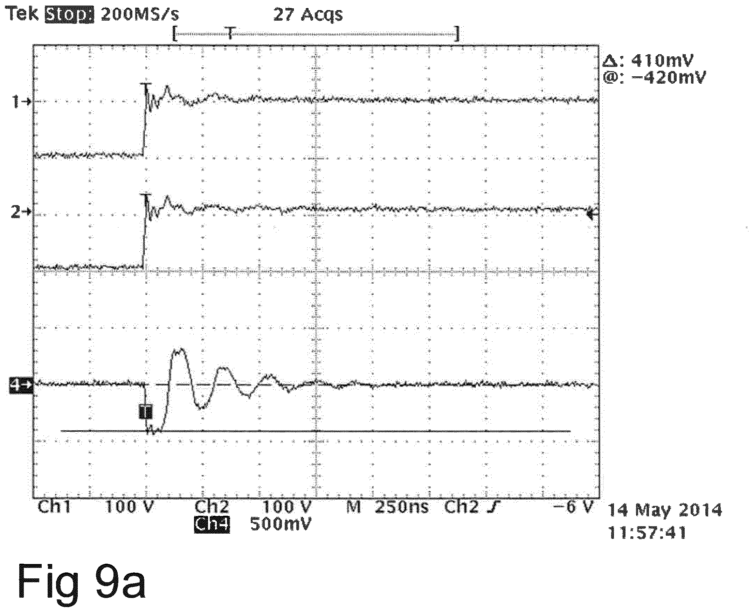

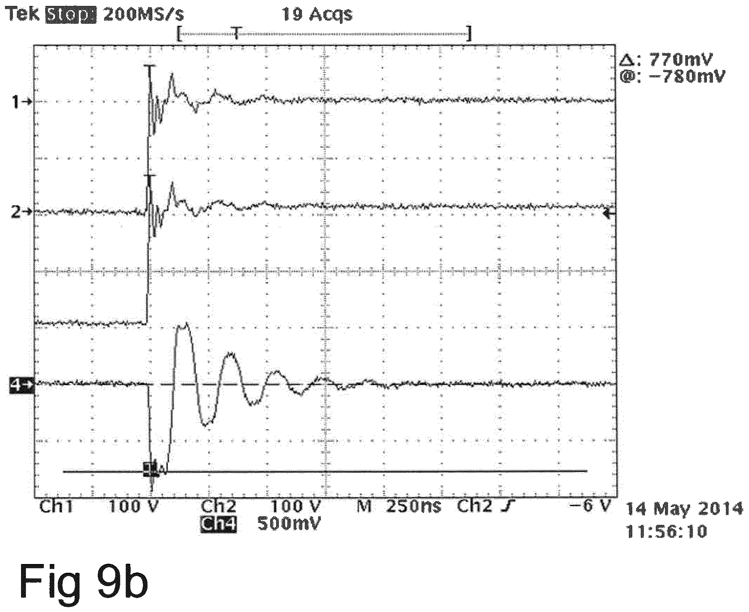

Die Diode 17 kann, muss aber nicht vorhanden sein. Bipolare Hochfrequenz- Impulszüge für ein erstes Beispiel einer Feinstbearbeitung, mit einer abklingenden Hüllkurve nach den Figuren 9a und 9b können nur ohne Diode 17 erzeugt werden.

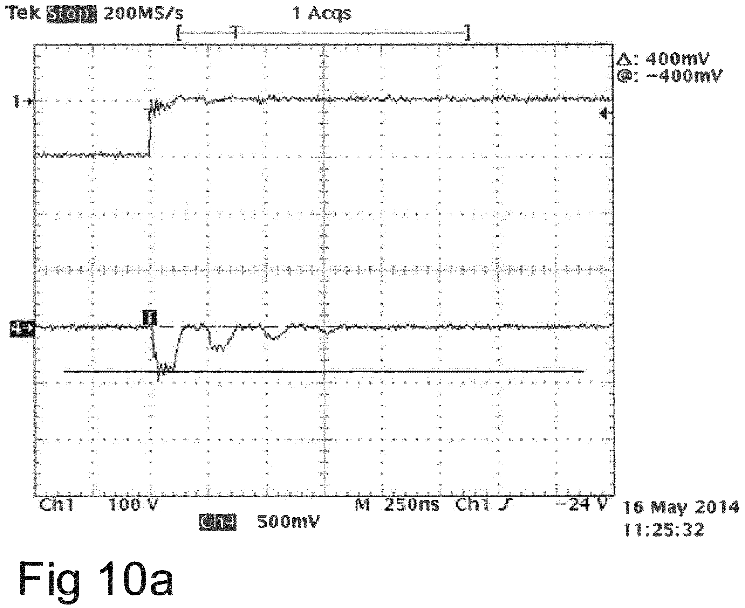

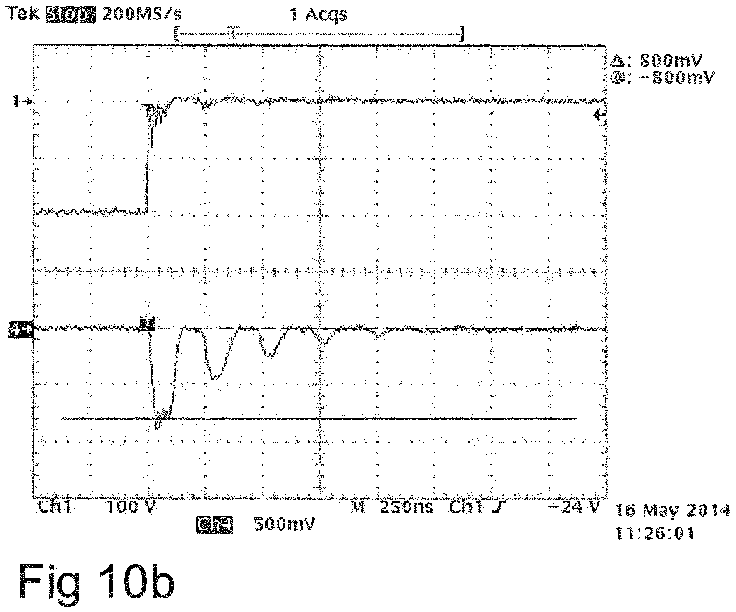

Monopolare Hochfrequenz-Impulszüge für ein zweites Beispiel einer Feinstbearbeitung, mit einer abklingenden Hüllkurve wie in den Figuren 10a und 10b dargestellt, können eine Diode 17 und müssen eine zusätzliche Umschwing-Diode (nicht gezeichnet) aufweisen. Die Umschwing-Diode ist dabei so zwischen Werkstückanschluss 10 und der letzten Induktivität 4 des letzten Speichergliedes 16 angebracht, dass die rückschwingenden Stromimpulse über die Umschwing-Diode und nicht über die Funkenstrecke 44 fließen.

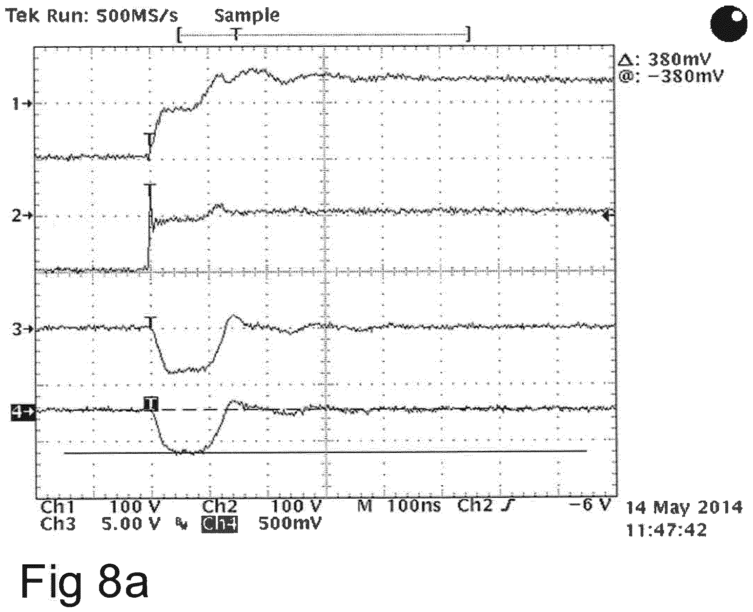

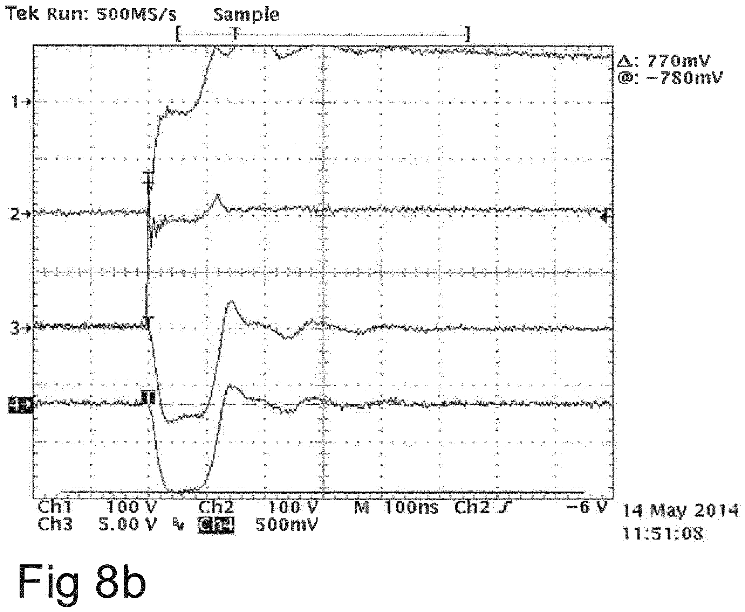

Bei der Erzeugung monopolarer Einzelimpulse nach Fig. 8a, 8b bleibt die diskrete Verzögerungsleitung bis zum nächsten Ladeimpuls des Generators auf einem gegenpoligen Rest-Spannungspotential, wird dann zuerst verlustarm auf ihre Normalpolarität umgeladen und anschließend überschwingungsfrei auf Nominalspannung nachgeladen. Zum besseren Verständnis dieser Verfahren sei auf die erwähnte Patentschrift EP 1 719 570 von D'Amario verwiesen.

Der generatorseitige Abschnitt der Leiterbahnen 8, 12, mit dem Generatoranschluss 7 der Leiterbahn 8 zum Werkstück, und dem Generatoranschluss 11 der Leiterbahn 12 zur Elektrode, kann prinzipiell beliebig lang sein.

Die Leiterbahnen 8 und 12 können zwar ihrerseits eine parasitäre Verzögerungsleitung bilden, welche sich in Form einer Nachentladung nach dem Impulsende des Entladestromes auswirken könnte, und somit das Impulsende deformieren würde. Wählt man jedoch eine hohe Wellenimpedanz für die Leitung 8, 12, kann es schon ausreichen, um den unerwünschten Effekt zu unterdrücken.

Als Alternative kann man auch eine Entkopplungsimpedanz zwischen dem ersten Speicherglied 14 und der generatorseitigen Leiterbahn 12 einfügen. Die Entkopplungsimpedanz besteht vorteilhaft aus einer resistiven und einer induktiven Komponente, also beispielsweise der Serieschaltung einer SMD- Induktivität 9 mit einem SMD- Widerstand 13.

Es kann weiter vorteilhaft sein, eine differentielle Messleitung für die Erfassung der Spannung zwischen Elektrode 30 und Werkstück 35 auf der Leiterfolie 1 vorzusehen. Die möglichst feinen und symmetrischen Leiterbahnen (Feinleiterbahnen; nicht gezeichnet) werden über SMD- Abschlusswiderstände (nicht gezeichnet) an den Werkstückanschluss 10 und an den Elektrodenanschluss 18 verbunden. Generatorseitig empfängt ein schneller Differentialverstärker die differentiellen Signale, und leitet dann ein massebezogenes Signal dem Steuersystem weiter.

Dieses massebezogene Signal, welches in harter Echtzeit die Spannung der Funkenstrecke repräsentiert, dient in einer Erosionsmaschine ganz verschiedenen Prozessen: Erstens werden für das Servo- System verschiedene Mittelwerte oder Statistiken gebildet wie: mittlere Zündverzögerung, mittlere Impulsspannung, Anzahl Erosionsentladungen, Anzahl Leerlaufimpulse, Anzahl Kurzschlussimpulse usw.

Zweitens wird die Impulsquelle anhand einer Detektion von Leerlauf-, Erosions- oder Kurzschlusspegel aktiv so gesteuert, dass ein Leerlaufimpuls nur eine vorgewählte Zeit andauert (Verhinderung von Ausfunken), ein Erosionsimpuls nicht durch den Ladestrom verlängert wird, und ein Kurzschlussimpuls ebenfalls nur eine vorgewählte Zeitdauer bestehen kann.

Drittens werden die so gefilterten Mittelwerte und Statistiken zur Auswahl und Optimierung von Strategien benutzt, um die Sicherheit, Stabilität und Effizienz des Prozesses zu erhöhen.

Wenn die Messleitung vereint mit der diskreten Verzögerungsleitung in der bandförmigen Zuleitung 45 integriert ist, kann man die Messleitung und deren Abschlusswiderstände auf die jeweiligen Betriebsfälle optimieren oder in Spezialfällen, zum Beispiel für Feinstbearbeitung bei konstantem Vorschub, überhaupt weglassen.

Die Messleitung soll einerseits Kurzimpulse möglichst formgetreu und verzögerungsfrei übermitteln und andererseits bei einer Feinstbearbeitung keine zusätzlichen Entladeströme in der Funkenstrecke 44 verursachen. Diese zwei allgemeinen Forderungen können erfindungsgemäss viel besser erfüllt werden.

Fig. 3 stellt eine weitere Ausgestaltung der Erfindung dar, um unterschiedliche Impulscharakteristiken in einer Zuleitung 45 zu vereinen. Es kann nämlich vorteilhaft sein, für eine Bearbeitung zum Schruppen eine Verzögerungsleitung 19 mit erster Charakteristik (Kapazität 5, Induktivität 4 und Anzahl Speicherglieder 14 bis 16) zu verwenden, und zum Schlichten eine Verzögerungsleitung 20 mit zweiter Charakteristik zu verwenden ohne die Zuleitung auszuwechseln.

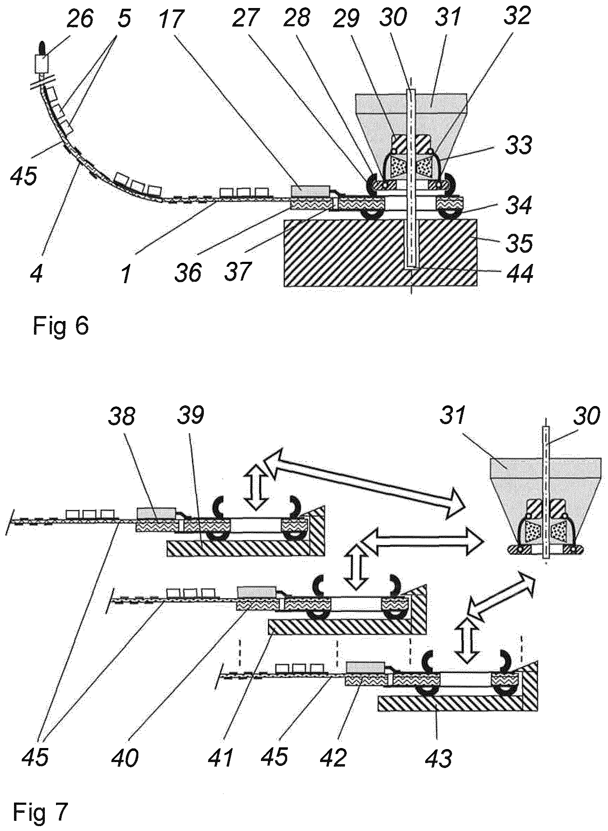

Eine solche diskrete Mehrfach- Verzögerungsleitung wird über den gemeinsamen Werkstückanschluss 24 auf ein Werkstück 35 kontaktiert und generatorseitig über die gemeinsame Leiterbahn 2 und den gemeinsamen Generatoranschluss 23 mit der Impulsquelle verbunden. Das Werkstückpotential ist normalerweise "ruhig", d.h. nicht mit Spannungssprüngen von Schaltvorgängen gestört, und wird meistens mit dem Erdpotential und der Maschinenstruktur verbunden. Der gemeinsame Generatoranschluss 23 könnte demnach über eine Sicherheitsverbindung zusätzlich mit dem Werkstück 35 verbunden werden, was besonders für die Ausführungsformen nach Fig. 6 und 7 mit den Schleifkontakten 34 auf das Werkstück 35 vorteilhaft ist.

Der Generator muss bei Mehrfach- Verzögerungsleitungen entsprechend mehrkanalig ausgeführt sein, oder alternativ je ein zusätzliches Schaltmittel (IGBT, MOSFET oder Relais) pro Generatoranschluss 21, 22 zur Elektrode aufweisen. Über die Dioden 17 werden die Verzögerungsleitungen 19, 20 auf den gemeinsamen Elektrodenanschluss 25 gekoppelt. Ausführungsformen dieser Art ohne Dioden 17 sind nicht möglich, da die Verzögerungsleitungen nicht mehr voneinander getrennt wären.

Eine elektronische Aktivierung der Verzögerungsleitungen kann synchron, einzeln oder gruppenweise (Summierung der Charakteristik), oder in Spezialfällen auch alternierend erfolgen um höhere Frequenzen, Welligkeiten oder längere Impulszeiten zu erzielen.

Mehrfach- Verzögerungsleitungen nach Fig. 3 sind besonders für den Einbau in Armstrukturen (d.h. in Tragstrukturen der Führungsköpfe 31) von elektroerosiven Drahtschneide- und Senkmaschinen geeignet. Bei Drahtschneidemaschinen könnte man in vielen Fällen auf eine Einspeisung im unteren Arm verzichten. Es hat sich aber oft gezeigt, dass diese Methode bei höheren Werkstücken und dünnen Elektroden-Drähten eine unerwünschte, resistiv bedingte Impulsabschwächung über die Werkstückhöhe verursachen kann.

Die Unterbringung der Verzögerungsleitungen im Innern von Armstrukturen bringt gleich mehrere Vorteile: Die empfindlichen SMD-Bauelemente sind gegen Umwelteinflüsse hervorragend geschützt, eine eventuelle elektromagnetische Abstrahlung der Verzögerungsleitungen wird abgeschirmt, die Biegebeanspruchung der bandförmigen Leitung wird eliminiert, und die elektrodenseitigen Mehrfachkontaktmittel 27, der Kontaktring 28 und die flexiblen Stromverbindungen 33 nach Fig. 6 können entfallen, weil der elektrodenseitige Anschluss 25 direkt an die Stromkontakte 29 verbunden werden kann.

Als Nachteil muss erwähnt werden, dass nur eine limitierte Anzahl von diskreten Verzögerungsleitungen in einem Arm Platz finden und dass ein Austausch der Leitungen bedeutend aufwändiger wird.

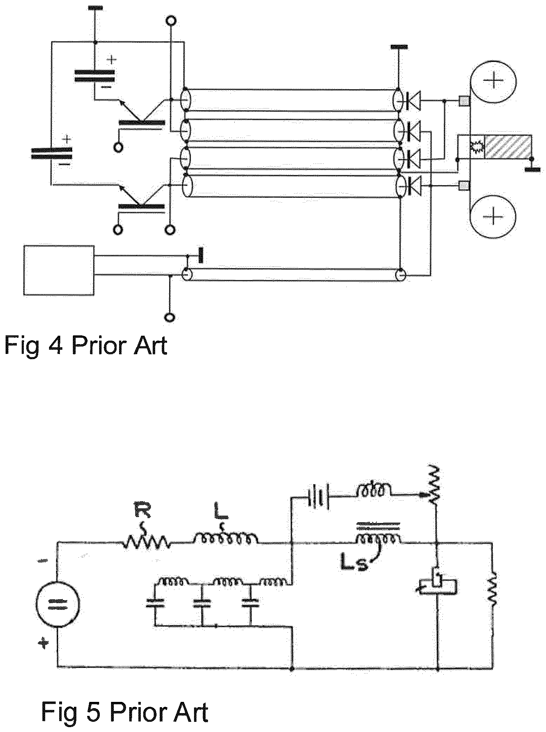

Die Fig. 4 und 5 zeigen bekannte Lösungen für homogene und diskrete Verzögerungsleitungen. Diese wurden einleitend zum Stand der Technik diskutiert.

Die Fig. 6 stellt eine Lösung für den Einbau einer erfindungsgemässen diskreten Verzögerungsleitung in eine funkenerosive Bohrmaschine dar. Die flexible Leiterfolie 1, welche eine oder mehrere starre Leiterplatten 36 mit Kontaktierungsbohrungen 37 zur Verstärkung aufweisen kann, trägt die SMD- Kapazitäten 5, Induktivitäten 4, die Diode 17, sowie die Mehrfachkontaktmittel 27 und 34.

Die Mehrfachkontaktmittel 27, 34 sind bevorzugt torusartig gestaltete Kontaktfedern und koaxial um die Elektrode 30 angeordnet. Diese extrem kurze und koaxiale Verbindung trägt entscheidend zur Reduktion der störenden Streuinduktivität bei.

Die Mehrfachkontaktmittel 27, 34 sind weiter so gestaltet, dass sie eine Vielzahl von unabhängigen Berührungspunkten aufweisen um den Impulsstrom auf möglichst viele Pfade aufzuteilen. Die Mehrfachkontaktmittel 27, 34 müssen dabei nicht unbedingt aus Blech hergestellt sein, auch bürstenartige Ausführungen oder drahtförmige Federn können interessante Eigenschaften aufweisen. Für die werkstückseitigen Mehrfachkontaktmittel 34 trifft dies besonders zu, da die Oberfläche des Werkstückes 35 absolut nicht beschädigt werden darf.

Die Mehrfachkontaktmittel 27, 34 sollten bevorzugt folgende Materialeigenschaften aufweisen: elektrisch gut leitfähig, elastisch, abriebfest, hart und sollten eine möglichst benachbarte Position in der elektrochemischen Spannungsreihe aufweisen wie das Werkstück 35 bzw. wie der Kontaktring 28. Es kann darum auch für dieses Argument vorteilhaft sein, für unterschiedliche Anforderungen unterschiedliche Verzögerungsleitungen bereitzustellen.

Eine mehrpolige generatorseitige Steckvorrichtung 26 ermöglicht ein schnelles manuelles Auswechseln der diskreten Verzögerungsleitungen. Die elektrodenseitigen Mehrfachkontaktmittel 27 können auf einem Kontaktring 28 mechanisch ein- und ausrasten, und gleichzeitig einen niederohmigen elektrischen Kontakt herstellen. Durch die runde Form des Kontaktringes 28 ist es möglich die Verzögerungsleitungen in beliebiger Richtung auszulegen.

Es sind natürlich eine Vielzahl alternativer Halteprinzipien denkbar. So können beispielsweise auch elektromagnetisch, dauermagnetisch, pneumatisch, hydraulisch, oder durch Vakuum erzeugte Haltekräfte dienlich sein.

Die Mehrfachkontaktmittel 27 und 34 können so gestaltet werden, dass sie auch automatisch bestückbar sind, wie die anderen SMD- Bauelemente 5, 9, 13, 17. Im Endresultat sind so hergestellte diskrete Verzögerungsleitungen sehr preiswert und können problemlos als Massenprodukt oder als Verschleißteil eingesetzt werden, was insbesondere für die gedruckten Versionen zutrifft.

Die Verzögerungsleitungen hängen zwar bevorzugt im Trockenbereich über dem Arbeitsraum, dennoch sollten die elektronischen Komponenten 5, 9, 13, 17 vor Flüssigkeiten und Umwelteinflüssen geschützt werden. Ein weichelastischer Polyurethanlack ist dafür beispielsweise gut geeignet.

Der Kontaktring 28 hat noch eine zusätzliche Aufgabe, er muss mechanische Kräfte der Verzögerungsleitung auf den Führungskopf 31 verhindern. Dazu ist der Kontaktring 28 mechanisch vom Führungskopf 31 entkoppelt, d.h. er wird bevorzugt von einem zusätzlichen Träger (nicht gezeichnet) gehalten, und mit der Struktur der Maschine verbunden. Die elektrische Verbindung zu den Stromkontakten 29 der Elektrode 30 wird durch mehrere flexible Stromverbindungen 33 hergestellt.

Die Elektrodenführung 32 ist normalerweise zwischen den Stromkontakten 29 der Elektrode 30 und dem Werkstück 35 angeordnet. In vielen Fällen könnte man die beiden Funktionen vereinen, indem man anstelle der Elektrodenführung 32 eine leitende Elektrodenführung an die flexiblen Stromverbindungen 33 anschließen würde. Die störende parasitäre Streuinduktivität der Impulseinspeisung könnte damit weiter verringert werden, und würde entsprechend noch steilere Impulse ermöglichen.

Die Fig. 7 zeigt, ebenfalls für eine funkenerosive Bohrmaschine, ein zweites Prinzip, um verschiedene Impulscharakteristiken aktivieren zu können. Eine automatische Einwechslung von Verzögerungsleitungen 38, 40, 42 mit unterschiedlichen Charakteristiken ermöglicht ideal abgestufte Bearbeitungsregime. Für den Spezialfall der Massenfertigung von Präzisionsteilen, könnte man identische Sätze von Verzögerungsleitungen 38, 40, 42 bereithalten, um die Autonomie der Produktionsanlage zu erhöhen, falls die Verzögerungsleitungen einem Verschleiß unterworfen wären.

Um den Führungskopf 31 herum sind, bevorzugt halbkreisförmig angeordnet, mehrere Parkvorrichtungen 39, 41, 43, fest mit dem Maschinentisch verbunden. Die Parkvorrichtungen 39, 41, 43 weisen zum Beispiel eine schienenförmige Struktur auf und haben mindestens einseitig eine umgreifende Ausformung. Über vorprogrammierte Sequenzen von Bewegungen (als Pfeile symbolisiert) der Maschinenachsen X, Y, Z und bei zurückgezogener Elektrode 30 können Verzögerungsleitungen 38, 40, 42 am Führungskopf 31 eingerastet und aus Parkvorrichtungen 39, 41, 43 durch Ausziehen aus der umgreifenden Ausformung entnommen werden. Umgekehrt können Verzögerungsleitungen 38, 40, 42 in Parkvorrichtungen 39, 41, 43 eingeparkt und dank der umgreifenden Ausformung vom Führungskopf 31 abgestreift bzw. ausgerastet werden. Der automatische Wechselvorgang einer Verzögerungsleitung dauert typischerweise nur wenige Sekunden. Generatorseitig muss natürlich die Impulsquelle über elektromechanische oder elektronische Schaltvorrichtungen auf die eingewechselte Verzögerungsleitung umgeschaltet werden.

Die Figuren 8a bis 10b zeigen verschiedene Entladeimpulse am Beispiel einer für alle Figuren gleichen, diskreten Verzögerungsleitung mit fünf Speichergliedern 14, 15, 16, mit Kapazitäten 5 von 470pF, Induktivitäten 4 von 235nH.

Die Induktivitäten 4 wurden aus zwei abgeschirmten SMD- Induktivitäten vom Typ WE-TPC 470nH / 4.7A Sättigungsstrom der Firma Würth, D aufgebaut. Diese Induktivitäten weisen einen Durchmesser von 3mm und eine Bauhöhe von 2.8mm auf, und kosten zurzeit etwa € 0.36 pro Stück.

Die Variationen sind: Fig. 8 mit Diode 17, Fig. 9 ohne Diode 17, Fig. 10 mit Diode 17 und zusätzlicher Umschwing- Diode, und bei Quellenspannungen von a: 100V und b: 200V.

Theoretisch hat diese Verzögerungsleitung eine Impedanz von Z = 22.4 Ohm und eine elementare Verzögerungszeit von 21ns, d.h. für 5 Speicherglieder 14, 15, 16, 105ns (gemessen wurde 114ns).

Bei der Quellenspannung von 100V wäre im Kurzschlussfall für alle Varianten eine Stromamplitude von 4.47A (gemessen wurde 3.8A bis 4.1A) und bei einer Funkenspannung von 25V eine solche von 3.35A zu erwarten. Der Stromanstieg beim Impulsanfang wäre theoretisch im Kurzschlussfall 0.426A/ns (gemessen wurde 0.25A/ns), und bei 25V Funkenspannung 0.319A/ns.

Bei der Quellenspannung von 200V wäre im Kurzschlussfall für alle Varianten eine Stromamplitude von 8.94A (gemessen wurde 7.7A bis 8.0A) und bei einer Funkenspannung von 25V eine solche von 7.83A zu erwarten. Der Stromanstieg beim Impulsanfang wäre theoretisch im Kurzschlussfall 0.851A/ns (gemessen wurde 0.34A/ns), und bei 25V Funkenspannung 0.745A/ns.

Die in Klammer angegebenen Messwerte wären auf einer Erosionsmaschine ohne Rückwirkungen der Messeinrichtung nicht zu verifizieren. Würde man etwa eine Strommesseinrichtung in die flexible Stromverbindung 33 einschlaufen, oder eine Stromsonde um die Elektrode 30 schließen, wäre die Erhöhung der Streuinduktivität unakzeptablen hoch, und die Messwerte wären unrealistisch.

Aus diesem Grund wurden die Messungen nach Fig. 8a bis 10b in einem Laboraufbau ermittelt. Es wurde mit kurzmöglichsten Leitungen ein 1- Ohm Messwiderstand, ein Quecksilber- benetzter Schalter und eine P6021- Stromsonde der Firma Tektronix, USA, in Serie zwischen dem Werkstückanschluss 10 und dem Elektrodenanschluss 18 verbunden. Der prellfreie Quecksilber-benetzte Schalter simuliert mit seiner fast unendlich steilen Spannungsflanke wirklichkeitsnah den Durchbruch einer Funkenstrecke. Der Schalter wird dabei lediglich mit einer Wiederholfrequenz von etwa 1Hz betrieben.

Zusammenfassend kann gesagt werden, dass dieser Aufbau doch etwa 200nH Streuinduktivität beiträgt, was die leicht verschlechterten Messwerte weitgehend erklärt. Die beiden unterschiedlichen Strommessverfahren mit Messwiderstand und Stromsonde ergeben gut übereinstimmende Resultate.

Im Detail zeigt die Fig. 8a für 100V Quellenspannung, bei vorhandener Diode 17, die Kanäle CH1: Spannung 100V/div am Ausgang des letzten Speichergliedes 16, CH2: Spannung 100V/div am Elektrodenschluss 18, CH3: Spannung am Messwiderstand 5V/div mit einer Bandbreite von 20MHz gefiltert und CH4: die Stromsonde mit 5A/div. Die Fig. 8b zeigt für 200V Quellenspannung, bei vorhandener Diode 17, die Kanäle CH1: Spannung 100V/div am Ausgang des letzten Speichergliedes 16, CH2: Spannung 100V/div am Elektrodenschluss 18, CH3: Spannung am Messwiderstand 5V/div mit einer Bandbreite von 20MHz gefiltert und CH4: die Stromsonde mit 5A/div.

Die Fig. 9a zeigt für 100V Quellenspannung, ohne Diode 17, die Kanäle CH1: Spannung 100V/div am Ausgang des letzten Speichergliedes 16, CH2: Spannung 100V/div am Elektrodenschluss 18 und CH4: die Stromsonde mit 5A/div.

Die Fig. 9b zeigt für 200V Quellenspannung, ohne Diode 17, die Kanäle CH1: Spannung 100V/div am Ausgang des letzten Speichergliedes 16, CH2: Spannung 100V/div am Elektrodenschluss 18 und CH4: die Stromsonde mit 5A/div.

Die Fig. 10a zeigt für 100V Quellenspannung, mit Diode 17 und einer Umschwing-Diode, die Kanäle CH1: Spannung 100V/div am Elektrodenschluss 18 und CH4: die Stromsonde mit 5A/div.

Die Fig. 10b zeigt für 200V Quellenspannung, mit Diode 17 und einer Umschwing-Diode, die Kanäle CH1: Spannung 100V/div am Elektrodenschluss 18 und CH4: die Stromsonde mit 5A/div.

Um steilere Impulse gleicher Dauer und Amplitude zu erzeugen, muss man die Anzahl Speicherglieder erhöhen. Mit beispielsweise 24 Speichergliedern mit Kapazitäten 5 von 100pF und Induktivitäten 4 von 50nH, (Werte die sich gut für eine gedruckte Ausführung eignen), hätte man theoretisch die gleiche Impedanz von Z = 22.4 Ohm, aber eine elementare Verzögerungszeit von nur 4.47ns, und entsprechend für 24 Speicherglieder 107ns.

Die Impulsflanken würden theoretisch, d.h. entsprechend der halben elementaren Verzögerungszeit, von 10.5ns auf 2.235ns reduziert, was allerdings nur möglich ist, wenn man die Streuinduktivität zur Funkenstrecke innerhalb von 50nH halten kann.

Diese Forderung ist offensichtlich mit der erfindungsgemässen koaxialen Einspeisung über die Mehrfachkontaktmittel 27, 34 auf den Führungskopf 31 und das Werkstück 35 erfüllbar, aber leider ohne Rückwirkung nicht messbar, wie vorgehend schon beschrieben.

Stromimpulse für die funkenerosive Bearbeitung mit fast beliebiger Amplitude und mit Impulszeiten kürzer als 10ns rücken somit erstmals in den Bereich des Möglichen.

Es gibt viele andere Lösungen und Varianten für Ausführungen von diskreten Verzögerungsleitungen, von Mehrfachkontaktmitteln und Parkvorrichtungen im Sinn und Zweck der beanspruchten Merkmale. Die aufgeführten Beispiele dienen nur zum besseren Verständnis der Erfindung und sind deshalb nicht einschränkend zu verstehen.

**Bezugszeichen:**

| 1 | Flexible Leiterfolie |
|---|---|
| 2 | Leiterbahn Werkstück |
| 3 | Leiterbahn Elektrode |
| 4 | Induktivität |
| 5 | SMD- Kapazitäten |
| 6 | Kontaktierungsbohrungen |
| 7 | Generatoranschluss Werkstück |
| 8 | Generatorseitige Leiterbahn Werkstück |
| 9 | SMD- Induktivität |
| 10 | Werkstückanschluss |
| 11 | Generatoranschluss Elektrode |
| 12 | Generatorseitige Leiterbahn Elektrode |
| 13 | SMD- Widerstand |
| 14 | Erstes Speicherglied |
| 15 | Zweites Speicherglied |
| 16 | Letztes Speicherglied |
| 17 | Diode |
| 18 | Elektrodenanschluss |
| 19 | Verzögerungsleitung erster Charakteristik |
| 20 | Verzögerungsleitung zweiter Charakteristik |
| 21 | Generatoranschluss Elektrode erster Charakteristik |
| 22 | Generatoranschluss Elektrode zweiter Charakteristik |
| 23 | Gemeinsamer Generatoranschluss Werkstück |
| 24 | Gemeinsamer Werkstückanschluss |
| 25 | Gemeinsamer Elektrodenanschluss |
| 26 | Mehrpolige Steckvorrichtung |
| 27 | Elektrodenseitige Mehrfachkontaktmittel |
| 28 | Kontaktring |
| 29 | Stromkontakt der Elektrode |
| 30 | Elektrode |
| 31 | Führungskopf |
| 32 | Elektrodenführung |
| 33 | Flexible Stromverbindungen |
| 34 | Werkstückseitige Mehrfachkontaktmittel |
| 35 | Werkstück |
| 36 | Starre Leiterplatte |
| 37 | Kontaktierungsbohrung zur Leiterfolie |
| 38 | Erste Verzögerungsleitung |
| 39 | Erste Parkvorrichtung |

40     Zweite Verzögerungsleitung
41     Zweite Parkvorrichtung
42     Letzte Verzögerungsleitung
43     Letzte Parkvorrichtung
44     Funkenstrecke
45     Zuleitung

## Patentansprüche

1.  Verfahren für die funkenerosive Bearbeitung eines Werkstückes (35) mittels rechteckförmiger Bearbeitungsimpulsen, wobei die rechteckförmigen Bearbeitungsimpulse durch Entladung von einer oder mehreren diskreten Verzögerungsleitungen (14, 15, 16, 17) welche aus mehreren Speichergliedern (14, 15, 16) bestehen geformt werden, **dadurch gekennzeichnet, dass** die Speicherglieder (14, 15, 16) als Teil einer Zuleitung (45) zu einer Funkenstrecke (44) auf einem Abschnitt (14, 15, 16, 17, 18) der Zuleitung (45) bei der Funkenstrecke (44) angeordnet sind und dass die diskreten Verzögerungsleitungen (14, 15, 16, 17) über elektrodenseitige Kontaktmittel (27) mit einem Führungskopf (31) verbunden sind und über werkstückseitige Kontaktmittel (34) mit dem Werkstück (35) verbunden sind.

2.  Verfahren nach Anspruch 1, **dadurch gekennzeichnet, dass** die Zuleitung (45) bandförmig und biegsam ist, gedruckte Leiterbahnen (2, 3, 8, 12) und gedruckte Bauelemente (4) und / oder oberflächenbestückbare SMD- Bauelemente (5, 9, 13, 17) aufweist.

3.  Verfahren nach Anspruch 2, **dadurch gekennzeichnet, dass** die bandförmige und biegsame Zuleitung Feinleiterbahnen und Abschlusswiderstände für eine Messung der Impulsspannung und für eine Detektion einer funkenerosiven Entladung oder eines Kurzschlusses aufweist.

4.  Verfahren nach Anspruch 3, **dadurch gekennzeichnet, dass** die Bearbeitungsimpulse gemessen werden und dass:

    - bei Detektion einer funkenerosiven Entladung ein Ladeimpuls einer Impulsquelle abgebrochen wird, und
    - bei fehlender Detektion, oder bei der Detektion eines Kurzschlusses der Ladeimpuls nach vorgehend festgelegten Impulszeiten abgebrochen wird, und
    - dass die Speicherglieder (14, 15, 16) anschliessend durch die Impulsquelle entladen werden.

5.  Verfahren nach Anspruch 1, **dadurch gekennzeichnet, dass** die elektrodenseitigen Kontaktmittel (27) und die werkstückseitigen Kontaktmittel (34) Mehrfachkontaktmittel (27, 34) sind und torusförmig gestaltet sind.

6.  Verfahren nach Anspruch 1, **dadurch gekennzeichnet, dass** die Zuleitung (45) mehrere parallele diskrete Verzögerungsleitungen (19, 20) aufweist und dass die diskreten Verzögerungsleitungen (19, 20) entweder einzeln, alternierend oder parallel von einer Impulsquelle aktiviert werden.

7.  Verfahren nach Anspruch 1, **dadurch gekennzeichnet, dass** die diskreten Verzögerungsleitungen (14, 15, 16, 17) elektrodenseitig entweder keine, eine oder mehrere Dioden (17) aufweisen, vorzugsweise sind die Dioden (17) Schottky- oder Siliziumkarbid- Dioden und sind in Stromrichtung des rechteckförmigen Impulses eingefügt.

8.  Verfahren nach Anspruch 7, **dadurch gekennzeichnet, dass** keine Diode (17) vorhanden ist und die Induktivität (4) des letzten Speichergliedes (16) direkt mit dem Elektrodenanschluss (18, 25) verbunden wird, um bipolare Impulszüge mit abklingender Hüllkurve zu erzeugen.

9.  Verfahren nach Anspruch 7, **dadurch gekennzeichnet, dass** eine Diode (17) zwischen der Induktivität (4) des letzten Speichergliedes (16) und dem Elektrodenanschluss (18, 25) verbunden wird, um rechteckförmige Einzelimpulse zu erzeugen.

10. Verfahren nach Anspruch 9, **dadurch gekennzeichnet, dass** zusätzlich eine Umschwingdiode so zwischen Werkstückanschluss (10, 24) und Induktivität (4) des letzten Speichergliedes (16) eingefügt wird, dass die rückschwingenden Stromimpulse über die Umschwingdiode fliessen können um monopolare Impulszüge mit abklingender Hüllkurve zu erzeugen.

11. Verfahren nach Anspruch 1, **dadurch gekennzeichnet, dass** mehrere diskrete Verzögerungsleitungen (38, 40, 42) auf mehreren Parkvorrichtungen (39, 41, 43) in einem Arbeitsraum bereitgehalten werden und dass eine bestimmte diskrete Verzögerungsleitung (38, 40, 42) über die elektrodenseitigen Mehrfachkontaktmittel (27) und durch vorprogrammierte Achsenbewegungen mit dem Führungskopfes (31) verbunden wird, und aus einer Parkvorrichtung (39, 41, 43) entnommen, oder in einer Parkvorrichtung (39, 41, 43) abgelegt wird.

12. Impulsformeinrichtung für die funkenerosive Bearbeitung von Werkstücken (35) mit einem Generator und einer oder mehrerer Verzögerungsleitungen mittels rechteckförmiger Bearbeitungsimpulse, welche von dem Generator über die eine oder mehrere diskrete Verzögerungsleitungen (14, 15, 16, 17), auf eine Funkenstrecke (44) zwischen Werkstück (35) und Elektrode (30) übertragen werden, **dadurch gekennzeichnet, dass** die diskreten Verzögerungsleitungen (14, 15, 16, 17) mehrere Speicherglieder (14, 15, 16) enthalten, wobei die diskreten Verzögerungsleitungen (14, 15, 16, 17) als Teil einer Zuleitung (45) auf einem Abschnitt direkt vor der Funkenstrecke (44) angeordnet sind und wobei die diskreten Verzögerungsleitungen (14, 15, 16, 17) elektrodenseitige Kontaktmittel (27) aufweist um auf einem Führungskopf (31) elektrischen Kontakt und mechanischen Halt her-bzw. sicherzustellen und werkstückseitige Kontaktmittel (34) aufweist, welche mit dem Werkstück (35) elektrischen Kontakt herstellen..

13. Impulsformeinrichtung nach Anspruch 12, **dadurch gekennzeichnet, dass** die Speicherglieder (14, 15, 16) seriell geschaltet und je aus mindestens einer Kapazität (5) und mindestens einer Induktivität (4) bestehen, und dass die Kapazität (5) parallel in die Verzögerungsleitung (14, 15, 16, 17) eingefügt ist und dass die Induktivität (4) in Richtung zur Funkenstrecke nach der Kapazität (5) seriell in die Verzögerungsleitung (14, 15, 16, 17) eingefügt ist.

14. Impulsformeinrichtung nach Anspruch 12, **dadurch gekennzeichnet, dass** die Speicherglieder (14, 15, 16) aus oberflächenbestückbaren SMD-Bauelementen bestehen und / oder dass die Kapazitäten (5) aus doppelseitig gedruckten Leiterflächen bestehen und / oder die Induktivitäten (4) aus spulenartig gedruckten Leiterbahnen bestehen.

15. Impulsformeinrichtung nach einem der vorangehenden Ansprüche, **dadurch gekennzeichnet, dass** die Zuleitung (45) eine bandförmige und flexible Leiterfolie (1) ist und mehrere parallele diskrete Verzögerungsleitungen (19, 20) aufweist, vorzugsweise können die diskreten Verzögerungsleitungen (19, 20) entweder einzeln, alternierend oder gruppenweise von einer mehrkanaligen Impulsquelle oder über zusätzliche Schaltelemente aktiviert werden.

16. Impulsformeinrichtung nach Anspruch 15, **dadurch gekennzeichnet, dass** die Speicherglieder (14, 15, 16) als Teil einer bandförmigen und flexiblen Leiterfolie (1) in gedruckter oder oberflächenbestückter Form am elektrodenseitigen Ende der bandförmigen und flexiblen Leiterfolie (1) angeordnet sind, vorzugsweise ist die bandförmige und flexible Leiterfolie (1) über eine mehrpolige Steckvorrichtung (26) mit der Impulsquelle verbunden.

17. Impulsformeinrichtung nach Anspruch 16, **dadurch gekennzeichnet, dass** die elektrodenseitigen und/ oder die werkstückseitigen Mehrfachkontaktmittel (27, 34) als oberflächenbestückbare SMD- Bauteile ausgebildet sind und dass in Bereichen erhöhter mechanischer Beanspruchung die bandförmige und flexible Leiterfolie (1) mit starren Leiterplatten (36) verstärkt und / oder mit Kontaktierungsbohrungen (37) zur Leiterfolie (1) verbunden ist.

18. Impulsformeinrichtung nach Anspruch 12, **dadurch gekennzeichnet, dass** die werkstückseitigen Kontaktmittel (34) Mehrfachkontaktmittel (34), oder Schleifkontakte (34), oder Bürstenkontakte (34) sind und koaxial um die Elektrode (30) angeordnet sind.

19. Impulsformeinrichtung nach Anspruch 12, **dadurch gekennzeichnet, dass** die elektrodenseitigen Kontaktmittel (27) torusförmig gestaltete Mehrfachkontaktmittel (27) sind, und auf einem unter dem Führungskopf (31) angeordneten Kontaktring (28) einrastbar sind oder magnetisch, hydraulisch, pneumatisch, oder durch Vakuum gehalten werden, wobei der Kontaktring (28) mechanisch vom Führungskopf (31) isoliert ist und über mehrere flexible Stromverbindungen (33) mit einem oder mehreren Stromkontakten (29) der Elektrode (30) verbunden ist.

20. Impulsformeinrichtung nach Anspruch 19, **dadurch gekennzeichnet, dass** mehrere diskrete Verzögerungsleitungen (38, 40, 42) auf mehreren Parkvorrichtungen (39, 41, 43) in einem Arbeitsraum bereitgehalten werden und dass die diskreten Verzögerungsleitungen (38, 40, 42) über die elektrodenseitigen Mehrfachkontaktmittel (27) und durch vorprogrammierte Achsenbewegungen eines Führungskopfes (31) mit diesem verbunden werden, und aus einer Parkvorrichtung (39, 41, 43) entnommen, oder in einer Parkvorrichtung (39, 41, 43) abgelegt werden, vorzugsweise sind die Parkvorrichtungen (39, 41, 43) zur Aufnahme von mehreren bandförmigen und biegsamen Zuleitungen (45) halbkreisförmig um den Führungskopf (31) angeordnet.

**Claims**

1. Method for electrical discharge machining a workpiece (35) by means of rectangular processing pulses, wherein the rectangular processing pulse for discharging one or multiple discrete delay lines (14, 15, 16, 17) that comprise multiple storage elements (14, 15, 16) are shaped, **characterized in that** the storage elements (14, 15, 16) are arranged as part of a feed line (45) to a spark gap (44) on a section (14, 15, 16, 17, 18) of the feed line (45) in the case of the spark gap (44) and that the discrete delay lines (14, 15, 16, 17) are connected by way of electrode-side contact means (27) to a guide head (31) and are connected by way of a workpiece-side contact means (34) to the workpiece (35).

**2.** Method according to Claim 1, **characterized in that** the feed line (45) is band-shaped and flexible, comprises printed conductor tracks (2, 3, 8, 12) and printed components (4) and/or surface-mountable SMD components (5, 9, 13, 17).

**3.** Method according to Claim 2, **characterized in that** the band-shaped and flexible feed line comprises fine conductor tracks and termination resistors for measuring the pulse voltage and for detecting an electrical discharge or a short circuit.

**4.** Method according to Claim 3, **characterized in that** the processing pulses are measured and that:

     - in the case of detecting an electrical discharge, a charging pulse of a pulse source is interrupted, and

     - in the event that there is no detection or that a short circuit is detected, the charge pulse is interrupted after the previously defined pulse durations, and

     - that the storage elements (14, 15, 16) are subsequently discharged by means of the pulse source.

**5.** Method according to Claim 1, **characterized in that** the electrode-side contact means (27) and the workpiece-side contact means (34) are multiple contact means (27, 34) and are formed in a toroidal manner.

**6.** Method according to Claim 1, **characterized in that** the feed line (45) comprises multiple parallel discrete delay lines (19, 20) and that the discrete delay lines (19, 20) are activated either individually, alternately or in parallel by a pulse source.

**7.** Method according to Claim 1, **characterized in that** on the electrode side the discrete delay lines (14, 15, 16, 17) either do not comprise a diode (17) or they comprise one or multiple diodes (17), the diodes (17) are preferably Schottky or silicon carbide diodes and are inserted in the flow direction of the rectangular pulse.

**8.** Method according to Claim 7, **characterized in that** a diode (17) is not provided and the inductor (4) of the final storage element (16) is connected directly to the electrode connection (18, 25) in order to generate bipolar pulse trains with a falling envelope curve.

**9.** Method according to Claim 7, **characterized in that** a diode (17) is connected between the inductor (4) of the final storage element (16) and the electrode connection (18, 25) in order to generate individual rectangular pulses.

**10.** Method according to Claim 9, **characterized in that** in addition a reversing diode is inserted between the workpiece connection (10, 24) and inductor (4) of the final storage element (16) in such a manner that the reversing current pulse can flow by way of the reversing diode in order to generate mono-polar pulse trains with a falling envelope curve.

**11.** Method according to Claim 1, **characterized in that** multiple discrete delay lines (38, 40, 42) are held ready on multiple parking devices (39, 41, 43) in a working area and that a specific discrete delay line (38, 40, 42) is connected to the guide head (31) by way of the electrode-side multiple contact means (27) and by means of pre-programmed axis movements and that said discrete delay lines are removed from a parking device (39, 41, 43) or stored in a parking device (39, 41, 43).

**12.** Pulse-shaping device for electrical discharge machining workpieces (35), having a generator and one or multiple delay lines, by means of rectangular processing pulses that are transmitted from the generator by way of the one or multiple discrete delay lines (14, 15, 16, 17) to a spark gap (44) between a workpiece (35) and electrode (30), **characterized in that** the discrete delay lines (14, 15, 16, 17) comprise multiple storage elements (14, 15, 16), wherein the discrete delay lines (14, 15, 16, 17) are arranged as part of a feed line (45) on a section directly upstream of the spark gap (44) and wherein the discrete delay lines (14, 15, 16, 17) have electrode-side contact means (27) in order to make or ensure electrical contact and mechanical hold on a guide head (31) and have workpiece-side contact means (34) which make electrical contact with the workpiece (35).

**13.** Pulse-shaping device according to Claim 12, **characterized in that** the storage elements (14, 15, 16) are connected in series and comprise in each case at least one capacitor (5) and at least one inductor (4), and that the capacitor (5) is inserted into the delay line (14, 15, 16, 17) in a parallel manner and the inductor (4) is inserted into the delay line (14, 15, 16, 17) in series in the direction towards the spark gap downstream of the capacitor (5).

**14.** Pulse-shaping device according to Claim 12, **characterized in that** the storage elements (14, 15, 16) comprise surface-mountable SMD components and/or that the capacitors (5) are embodied from double-sided printed conductor surfaces and/or the inductors (4) are embodied from spiral-type printed conductor tracks.

**15.** Pulse-shaping device according to any one of the preceding claims, **characterized in that** the feed line (45) is a band-shaped and flexible conductor foil (1) and comprises multiple parallel discrete delay lines (19, 20), it is preferred that the discrete delay lines (19, 20) can be activated either individually, alternatingly or in groups of a multi-channel pulse source or by way of additional switching elements.

16. Pulse-shaping device according to Claim 15, **characterized in that** the storage elements (14, 15, 16) are arranged as part of a band-shaped and flexible conductor film (1) in a printed or surface-mounted form on the electrode-side end of the band-shaped and flexible conductor film (1), it is preferred that the band-shaped and flexible conductor film (1) is connected by way of a multi-pole plug-in device (26) to the pulse source.

17. Pulse-shaping device according to Claim 16, **characterized in that** the electrode-side and/or the workpiece-side multiple contact means (27, 34) are embodied as surface-mountable SMD components and that in areas of increased mechanical loading the band-shaped and flexible conductor film (1) is reinforced with rigid conductor plates (36) and/or is connected by means of contacting bore holes (37) to the conductor film (1).

18. Pulse-shaping device according to Claim 12, **characterized in that** the workpiece-side contact means (34) are multiple contact means (34) or sliding contacts (34) or brush contacts (34) and are arranged in a coaxial manner around the electrode (30).

19. Pulse-shaping device according to Claim 12, **characterized in that** the electrode-side contact means (27) are multiple toroidal contact means (27) and can latch with a contact ring (28) that is arranged below the guide head (31) or are held in a magnetic, hydraulic or pneumatic manner or by means of a vacuum, wherein the contact ring (28) is mechanically isolated from the guide head (31) and is connected by way of multiple flexible current connections (33) to one or multiple current contacts (29) of the electrode (30).

20. Pulse-shaping device according to Claim 19, **characterized in that** multiple discrete delay lines (38, 40, 42) are held ready on multiple parking devices (39, 41, 43) in a working area and that the discrete delay lines (38, 40, 42) are connected by way of the electrode-side multiple contact means (27) and are connected thereto by means of the pre-programmed axis movements of a guide head (31) and are removed from a parking device (39, 41, 43) or stored in a parking device (39, 41, 43), it is preferred that the parking devices (39, 41, 43) are arranged in a semi-circle around the guide head (31) so as to receive multiple band-shaped and flexible feed lines (45).

## Revendications

1. Procédé d'usinage par électroérosion d'une pièce (35) au moyen d'impulsions d'usinage rectangulaires, les impulsions d'usinage rectangulaires étant façonnées par décharge d'une ou plusieurs lignes à retard (14, 15, 16, 17) discrètes qui se composent de plusieurs éléments d'accumulation (14, 15, 16), **caractérisé en ce que** les éléments d'accumulation (14, 15, 16), en tant que partie d'une ligne d'alimentation (45) vers une distance de décharge (44), sont disposés sur une portion (14, 15, 16, 17, 18) de la ligne d'alimentation (45) au niveau de la distance de décharge (44) et **en ce que** les lignes à retard (14, 15, 16, 17) discrètes sont reliées à une tête de guidage (31) par le biais de moyens de contact coté électrode (27) et sont reliées à la pièce (35) par le biais de moyens de contact côté pièce (34).

2. Procédé selon la revendication 1, **caractérisé en ce que** la ligne d'alimentation (45) est en forme de bande et souple, possède des pistes conductrices imprimées (2, 3, 8, 12) et des composants imprimés (4) et/ou des composants CMS (5, 9, 13, 17) implantables en surface.

3. Procédé selon la revendication 2, **caractérisé en ce que** la ligne d'alimentation en forme de bande et souple possède des pistes conductrices minces et des résistances de terminaison pour une mesure de la tension impulsionnelle et pour une détection d'une décharge d'électroérosion ou d'un court-circuit.

4. Procédé selon la revendication 3, **caractérisé en ce que** les impulsions de travail sont mesurées et **en ce que** :

   - lors de la détection d'une décharge d'électroérosion, une impulsion de charge d'une source d'impulsions est interrompue, et
   - en l'absence de détection ou lors de la détection d'un court-circuit, l'impulsion de charge est interrompue après des durées d'impulsion définies précédemment, et
   - **en ce que** les éléments d'accumulation (14, 15, 16) sont ensuite déchargés par la source d'impulsions.

5. Procédé selon la revendication 1, **caractérisé en ce que** les moyens de contact coté électrode (27) et les moyens de contact côté pièce (34) sont des moyens de contact multiples (27, 34) et sont de configuration torique.

6. Procédé selon la revendication 1, **caractérisé en ce que** la ligne d'alimentation (45) possède plusieurs lignes à retard (19, 20) discrètes parallèles et **en ce que** les lignes à retard (19, 20) discrètes sont activées individuellement, en alternance ou en parallèle par une source d'impulsions.

7. Procédé selon la revendication 1, **caractérisé en ce que** les lignes à retard (14, 15, 16, 17) discrètes côté électrode ne possèdent aucune diode (17), ou en possèdent une ou plusieurs, les diodes (17) étant de préférence des diodes Schottky ou au carbure de silicium et étant insérées dans le sens du courant de l'impulsion rectangulaire.

8. Procédé selon la revendication 7, **caractérisé en ce qu'**aucune diode (17) n'est présente et l'inductance (4) du dernier élément d'accumulation (16) est reliée directement à la borne d'électrode (18, 25) afin de générer des trains d'impulsions bipolaires avec une courbe d'enveloppe décroissante.

9. Procédé selon la revendication 7, **caractérisé en ce qu'**une diode (17) est reliée entre l'inductance (4) du dernier élément d'accumulation (16) et la borne d'électrode (18, 25) afin de générer des impulsions individuelles rectangulaires.

10. Procédé selon la revendication 9, **caractérisé en ce qu'**une diode d'inversion est en plus insérée entre la borne de pièce (10, 24) et l'inductance (4) du dernier élément d'accumulation (16) de sorte que les impulsions de courant à alternance directe peuvent passer par la diode d'inversion afin de générer des trains d'impulsions monopolaires ayant une courbe d'enveloppe décroissante.

11. Procédé selon la revendication 1, **caractérisé en ce que** plusieurs lignes à retard (38, 40, 42) discrètes sont tenues à disposition sur plusieurs arrangements de stationnement (39, 41, 43) dans un espace de travail et **en ce qu'**une ligne à retard (38, 40, 42) discrète donnée est reliée à la tête de guidage (31) par le biais des moyens de contact multiples côté électrode (27) et par des mouvements d'axe préprogrammés, et est prélevée d'un arrangement de stationnement (39, 41, 43) ou déposée dans un arrangement de stationnement (39, 41, 43).

12. Dispositif de formation d'impulsions pour l'usinage par électroérosion de pièces (35) avec un générateur et une ou plusieurs lignes à retard au moyen d'impulsions d'usinage rectangulaires, lesquelles sont transmises par le générateur par le biais de l'une ou des plusieurs lignes à retard (14, 15, 16, 17) discrètes sur une distance de décharge (44) entre la pièce (35) et une électrode (30), **caractérisé en ce que** les lignes à retard (14, 15, 16, 17) discrètes contiennent plusieurs éléments d'accumulation (14, 15, 16), les lignes à retard (14, 15, 16, 17) discrètes, en tant que partie d'une ligne d'alimentation (45), étant disposées sur une portion directement avant la distance de décharge (44) et les lignes à retard (14, 15, 16, 17) discrètes possédant des moyens de contact coté électrode (27) afin d'établir ou d'assurer le contact électrique et le maintien mécanique sur une tête de guidage (31) et possédant des moyens de contact côté pièce (34) qui établissent le contact électrique avec la pièce (35).

13. Dispositif de formation d'impulsions selon la revendication 12, **caractérisé en ce que** les éléments d'accumulation (14, 15, 16) sont branchés en série et se composent respectivement d'au moins un condensateur (5) et d'au moins une inductance (4), et **en ce que** le condensateur (5) est inséré en parallèle dans la ligne à retard (14, 15, 16, 17) et **en ce que** l'inductance (4) est insérée en série dans la ligne à retard (14, 15, 16, 17), après le condensateur (5) dans la direction vers la distance de décharge.

14. Dispositif de formation d'impulsions selon la revendication 12, **caractérisé en ce que** les éléments d'accumulation (14, 15, 16) se composent de composants CMS implantables en surface et/ou **en ce que** les condensateurs (5) se composent de surfaces conductrices imprimées en double face et/ou **en ce que** les inductances (4) se composent de pistes conductrices imprimées en forme de bobine.

15. Dispositif de formation d'impulsions selon l'une des revendications précédentes, **caractérisé en ce que** la ligne d'alimentation (45) est un film conducteur (11) en forme de bande et flexible et possède plusieurs lignes à retard (19, 20) discrètes parallèles, les lignes à retard (19, 20) discrètes pouvant de préférence être activées individuellement, en alternance ou par groupes par une source d'impulsions à plusieurs canaux ou par le biais d'éléments de commutation supplémentaires.

16. Dispositif de formation d'impulsions selon la revendication 15, **caractérisé en ce que** les éléments d'accumulation (14, 15, 16) sont disposés en tant que partie d'un film conducteur (1) en forme de bande et flexible sous forme imprimée ou implantée en surface sur l'extrémité côté électrode du film conducteur (1) en forme de bande et flexible, le film conducteur (1) en forme de bande et flexible étant de préférence relié à la source d'impulsions par le biais d'un arrangement à enfichage (26) multipolaire.

17. Dispositif de formation d'impulsions selon la revendication 16, **caractérisé en ce que** les moyens de contact multiples (27, 34) côté électrode et/ou côté pièce sont réalisés sous la forme de composants CMS implantables en surface et **en ce que** dans les zones à sollicitation mécanique accrue, le film conducteur (1) en forme de bande et flexible est renforcé avec des cartes conductrices (36) rigides et/ou relié avec des perçages de mise en contact (37) avec le film conducteur (1).

18. Dispositif de formation d'impulsions selon la revendication 12, **caractérisé en ce que** les moyens de contact côté pièce (34) sont des moyens de contact multiples (34) ou des contacts à glissement (34) ou des contacts à balai (34) et sont disposés de manière coaxiale autour de l'électrode (30).

19. Dispositif de formation d'impulsions selon la revendication 12, **caractérisé en ce que** les moyens de contact côté électrode (27) sont des moyens de contact multiples (27) de configuration torique, et peuvent être encliquetés sur une bague de contact (28) disposés sous la tête de guidage (31) ou sont maintenus de façon magnétique, hydraulique, pneumatique ou par le vide, la bague de contact (28) étant isolée mécaniquement de la tête de guidage (31) et étant reliée par le biais de plusieurs liaisons électriques (33) flexibles à un ou plusieurs contacts électriques (29) de l'électrode (30).

20. Dispositif de formation d'impulsions selon la revendication 19, **caractérisé en ce que** plusieurs lignes à retard (38, 40, 42) discrètes sont tenues à disposition sur plusieurs arrangements de stationnement (39, 41, 43) dans un espace de travail et **en ce que** les lignes à retard (38, 40, 42) discrètes sont reliées à une tête de guidage (31) par le biais des moyens de contact multiples côté électrode (27) et par des mouvements d'axe préprogrammés de celle-ci, et sont prélevées d'un arrangement de stationnement (39, 41, 43) ou déposées dans un arrangement de stationnement (39, 41, 43), les arrangements de stationnement (39, 41, 43) étant de préférence disposés en forme de demi-cercle autour de la tête de guidage (31) pour accueillir plusieurs lignes d'alimentation (45) en forme de bande et souples.

Fig 1

Fig 2

Fig 3

Fig 4 Prior Art

Fig 5 Prior Art

26  5  17  27  28  29  30  31  32

45

33

34

35

44

4  1  36  37

Fig 6

38  39  31  30

45  40  41  45  42  43

Fig 7

Fig 8a

Fig 8b

Fig 9a

Fig 9b

Fig 10a

Fig 10b

**IN DER BESCHREIBUNG AUFGEFÜHRTE DOKUMENTE**

**In der Beschreibung aufgeführte Patentdokumente**

- EP 1719570 A, Erfinder D'Amario
- DE 2653857, Ullmann
- US 3033971 A, Pfau